(19) Europäisches Patentamt / European Patent Office / Office européen des brevets

(11) **EP 4 550 700 A1**

(12) **EUROPEAN PATENT APPLICATION**
published in accordance with Art. 153(4) EPC

(43) Date of publication:
**07.05.2025 Bulletin 2025/19**

(21) Application number: **23849176.5**

(22) Date of filing: **10.07.2023**

(51) International Patent Classification (IPC):
**H04L 1/00** $^{(2006.01)}$

(52) Cooperative Patent Classification (CPC):
**H04L 1/00; H04L 25/02**

(86) International application number:
**PCT/CN2023/106583**

(87) International publication number:
**WO 2024/027467 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.08.2022 CN 202210938211**
**31.10.2022 CN 202211350145**

(71) Applicant: **Huawei Technologies Co., Ltd.**
**Shenzhen, Guangdong 518129 (CN)**

(72) Inventors:
• **FU, Kai**
  **Shenzhen, Guangdong 518129 (CN)**
• **YU, Zhan**
  **Shenzhen, Guangdong 518129 (CN)**
• **ZHANG, Heng**
  **Shenzhen, Guangdong 518129 (CN)**

(74) Representative: **Maiwald GmbH**
**Engineering**
**Elisenhof**
**Elisenstrasse 3**
**80335 München (DE)**

(54) **DATA TRANSMISSION METHOD AND RELATED PRODUCT**

(57) This application discloses a data transmission method and a related product. The data transmission method includes: generating a data frame, where the data frame includes a pilot symbol, and an insertion rule of the pilot symbol is determined based on at least one of channel information, a quantity of retransmission times of the data frame, or frame structure information of the data frame; and sending the data frame. In this application, not only channel tracking and receiving performance can be improved, but also a quantity of pilot symbols and overheads can be reduced to a maximum extent.

EP 4 550 700 A1

201
Generate a data frame, where the data frame includes a pilot symbol, and an insertion rule of the pilot symbol is determined based on at least one of channel information, a quantity of retransmission times of the data frame, or frame structure information of the data frame

202
Send the data frame

FIG. 3

**Description**

This application claims priorities to Chinese Patent Application No. 202210938211.4, filed with the China National Intellectual Property Administration on August 5, 2022 and entitled "PILOT INSERTION METHOD AND RELATED PRODUCT"; and to Chinese Patent Application No. 202211350145.5, filed with the China National Intellectual Property Administration on October 31, 2022 and entitled "DATA TRANSMISSION METHOD AND RELATED PRODUCT", which are incorporated herein by reference in their entireties.

**TECHNICAL FIELD**

This application relates to the field of communication technologies, and in particular, to a data transmission method and a related product.

**BACKGROUND**

In a short-range low-power frequency hopping communication system, a higher throughput and a higher receiving sensitivity are expected to be obtained by increasing a channel bandwidth and using channel coding. However, in an existing solution, there is a problem in channel estimation and tracking. As a result, a pilot symbol is inserted into a sent signal, to implement effective channel estimation and tracking. The pilot symbol is a known symbol, and can be known at a receive end without demodulation. Therefore, a receiving failure is not caused by channel distortion, and the pilot symbol can be used for channel estimation and tracking. However, a current pilot insertion manner is to insert pilots at an equal interval, and an insertion manner of uniformly inserting pilot symbols at an equal interval is not flexible enough.

**SUMMARY**

This application provides a data transmission method and a related product, so that an insertion rule can be flexibly selected to insert a pilot symbol into a data frame. Not only channel tracking and receiving performance can be improved, but also a quantity of pilot symbols and overheads can be reduced to a maximum extent.

According to a first aspect, an embodiment of this application provides a data transmission method. The method may be performed by a terminal device, or may be performed by a component (for example, a processor, a chip, or a chip system) of the terminal device. The data transmission method may include: generating a data frame, where the data frame includes a pilot symbol, and an insertion rule of the pilot symbol is determined based on at least one of channel information, a quantity of retransmission times of the data frame, or frame structure information of the data frame; and sending the data frame.

By implementing the method described in the first aspect, the insertion rule of the pilot symbol can be flexibly determined based on at least one of the channel information, the quantity of retransmission times of the data frame, or the frame structure information of the data frame. Not only channel tracking and receiving performance can be improved, but also a quantity of pilot symbols and overheads can be reduced to a maximum extent.

In a possible implementation, the channel information includes at least one of a channel interference power, channel state change speed information, a channel bandwidth, or a channel multipath interference strength.

By implementing the method, the insertion rule of the pilot symbol can be flexibly determined based on at least one of the channel interference power, the channel state change speed information, the channel bandwidth, or the channel multipath interference strength, so that the inserted pilot symbol adapts to a channel state. Not only the channel tracking and receiving performance can be improved, but also the quantity of pilot symbols and the overheads can be reduced to the maximum extent.

In a possible implementation, transmission of the data frame is performed on a first channel; and the insertion rule of the pilot symbol includes: when a channel interference power of the first channel falls within a first power range, the data frame includes a first quantity of pilot symbols; and when the channel interference power of the first channel falls within a second power range, the data frame includes a second quantity of pilot symbols, where all power values in the second power range are greater than all power values in the first power range, and the second quantity is greater than the first quantity.

By implementing the method, when interference power of a channel is higher, a larger quantity of pilot symbols are inserted into the data frame. When channel interference is weak, a small quantity of pilot symbols are inserted, so that the quantity of pilot symbols and the overheads are reduced to the maximum extent on a premise that channel estimation and tracking performance is ensured. When the channel interference is strong, a large quantity of pilot symbols are inserted, so that channel estimation and tracking performance can be ensured under strong interference.

In a possible implementation, transmission of the data frame is performed on a first channel; and the insertion rule of the pilot symbol includes: the insertion rule of the pilot symbol includes: when a channel state change speed indicated by channel state change speed information of the first channel is a first speed, the pilot symbol is inserted at a first time interval; and when the channel state change speed indicated by the channel state change speed information of the first channel is a second speed, the pilot symbol is inserted at a second time interval, where the second speed is higher than the first speed, and the second time interval is less than the first time interval.

By implementing the method, a faster channel state change of a channel indicates a smaller time interval for inserting the pilot symbol, to adapt to channel estimation and tracking performance in a scenario in which a channel changes fast.

In a possible implementation, transmission of the data frame is performed on a first channel; and

the insertion rule of the pilot symbol includes: when a channel bandwidth of the first channel is a first bandwidth, M1 consecutive pilot symbols are inserted each time; and when the channel bandwidth of the first channel is a second bandwidth, M2 consecutive pilot symbols are inserted each time, where M1 and M2 are integers greater than 1, the second bandwidth is greater than the first bandwidth, and a value of M2 is greater than a value of M1.

By implementing the method, a larger channel bandwidth indicates that a larger quantity of pilot symbols are inserted each time, to facilitate training of an equalizer.

In a possible implementation, the channel bandwidth of the first channel is greater than or equal to a bandwidth threshold.

By implementing the method, a plurality of consecutive pilot symbols are inserted each time only when the channel bandwidth of the first channel is greater than or equal to the bandwidth threshold, so that the quantity of the pilot symbols and the overheads are reduced to the maximum extent.

In a possible implementation, transmission of the data frame is performed on a first channel; and

the insertion rule of the pilot symbol includes: when a channel multipath interference strength of the first channel is a first strength, K1 consecutive pilot symbols are inserted each time; and when the channel multipath interference strength of the first channel is a second strength, K2 consecutive pilot symbols are inserted each time, where K1 and K2 are integers greater than 1, the second strength is greater than the first strength, and a value of K2 is greater than a value of K1.

By implementing the method, when a channel multipath interference strength of a channel is stronger, more pilot symbols are consecutively inserted, to facilitate the training of the equalizer.

In a possible implementation, the channel multipath interference strength of the first channel is greater than or equal to a multipath interference strength threshold.

By implementing the method, a plurality of consecutive pilot symbols are inserted each time only when the channel multipath interference strength of the first channel is greater than or equal to the multipath interference strength threshold, so that the quantity of pilot symbols and the overheads are reduced to the maximum extent.

In a possible implementation, the insertion rule of the pilot symbol includes: when an $i^{th}$ time of retransmission of the data frame is performed, the data frame includes a third quantity of pilot symbols; and when a $j^{th}$ time of retransmission of the data frame is performed, the data frame includes a fourth quantity of pilot symbols, where i and j are integers greater than or equal to 0, a value of j is greater than a value of i, and the fourth quantity is greater than the third quantity.

By implementing the method, when a larger quantity of retransmission times of the data frame indicates a larger quantity of pilot symbols included in the data frame, so that receiving performance of the data frame that has the larger quantity of retransmission times is improved, and the quantity of pilot symbols and the overheads are reduced to the maximum extent on a premise that the channel tracking and receiving performance is ensured.

In a possible implementation, the data frame includes a plurality of data units, and the quantity of retransmission times of the data frame includes quantities of retransmission times respectively corresponding to the plurality of data transmission units, where the plurality of data units include a first data unit and a second data unit; and

the insertion rule of the pilot symbol includes: a $k^{th}$ time of retransmission of the first data unit is performed, and the first data unit includes a fifth quantity of pilot symbols; and an $m^{th}$ time of retransmission of the second data unit is performed, and the second data unit includes a sixth quantity of pilot symbols, where m and k are integers greater than or equal to 0, a value of m is greater than a value of k, and the sixth quantity is greater than the fifth quantity.

By implementing the method, a quantity of pilot symbols included in the data unit is determined based on a quantity of retransmission times of the data unit in the data frame. A larger quantity of retransmission times of the data unit indicates a larger quantity of pilot symbols included in the data unit, so that the quantity of pilot symbols and the overheads are reduced to the maximum extent.

In a possible implementation, the insertion rule of the pilot symbol includes: in a sequence from a frame header to a frame trailer, pilot symbols in the data frame are from dense to sparse.

By implementing the method, in the sequence from the frame header to the frame trailer, the pilot symbols in the data frame are from dense to sparse, so that an error of channel estimation converges as soon as possible.

In a possible implementation, the frame structure information of the data frame indicates that a frame structure of the data frame is a first frame format, and a length of a synchronization sequence in the first frame format is less than or equal to a length threshold.

By implementing the method, when the synchronization sequence of the data frame is short, the pilot symbols inserted into the data frame are from dense to sparse, so that in a scenario in which an error of channel estimation is large in the synchronization sequence, the error of the channel estimation converges as soon as possible.

In a possible implementation, the first frame format is a Bluetooth low energy frame format.

In a possible implementation, the insertion rule of the pilot symbol includes: A plurality of consecutive pilot symbols are inserted each time.

By implementing the method, the plurality of consecutive pilot symbols are inserted each time, to facilitate the training of the equalizer.

In a possible implementation, the method is applied to a short-range wireless frequency hopping communication system.

According to a second aspect, an embodiment of this application provides a communication apparatus. The communication apparatus includes:

> a processing unit, configured to generate a data frame, where the data frame includes a pilot symbol, and an insertion rule of the pilot symbol is determined based on at least one of channel information, a quantity of retransmission times of the data frame, or frame structure information of the data frame; and
> a transceiver unit, configured to send the data frame.

In a possible implementation, the channel information includes at least one of a channel interference power, channel state change speed information, a channel bandwidth, or a channel multipath interference strength.

In a possible implementation, transmission of the data frame is performed on a first channel; and the insertion rule of the pilot symbol includes: when a channel interference power of the first channel falls within a first power range, the data frame includes a first quantity of pilot symbols; and when the channel interference power of the first channel falls within a second power range, the data frame includes a second quantity of pilot symbols, where all power values in the second power range are greater than all power values in the first power range, and the second quantity is greater than the first quantity.

In a possible implementation, transmission of the data frame is performed on a first channel; and the insertion rule of the pilot symbol includes: when a channel state change speed indicated by channel state change speed information of the first channel is a first speed, the pilot symbol is inserted at a first time interval; and when the channel state change speed indicated by the channel state change speed information of the first channel is a second speed, the pilot symbol is inserted at a second time interval, where the second speed is higher than the first speed, and the second time interval is less than the first time interval.

In a possible implementation, transmission of the data frame is performed on a first channel; and the insertion rule of the pilot symbol includes: when a channel bandwidth of the first channel is a first bandwidth, M1 consecutive pilot symbols are inserted each time; and when the channel bandwidth of the first channel is a second bandwidth, M2 consecutive pilot symbols are inserted each time, where M1 and M2 are integers greater than 1, the second bandwidth is greater than the first bandwidth, and a value of M2 is greater than a value of M1.

In a possible implementation, the channel bandwidth of the first channel is greater than or equal to a bandwidth threshold.

In a possible implementation, transmission of the data frame is performed on a first channel; and the insertion rule of the pilot symbol includes: when a channel multipath interference strength of the first channel is a first strength, K1 consecutive pilot symbols are inserted each time; and when the channel multipath interference strength of the first channel is a second strength, K2 consecutive pilot symbols are inserted each time, where K1 and K2 are integers greater than 1, the second strength is greater than the first strength, and a value of K2 is greater than a value of K1.

In a possible implementation, the channel multipath interference strength of the first channel is greater than or equal to a multipath interference strength threshold.

In a possible implementation, the insertion rule of the pilot symbol includes: when an $i^{th}$ time of retransmission of the data frame is performed, the data frame includes a third quantity of pilot symbols; and when a $j^{th}$ time of retransmission of the data frame is performed, the data frame includes a fourth quantity of pilot symbols, where i and j are integers greater than or equal to 0, a value of j is greater than a value of i, and the fourth quantity is greater than the third quantity.

In a possible implementation, the data frame includes a plurality of data units, and the quantity of retransmission times of the data frame includes quantities of retransmission times respectively corresponding to the plurality of data transmission units, where the plurality of data units include a first data unit and a second data unit; and the insertion rule of the pilot symbol includes: a $k^{th}$ time of retransmission of the first data unit is performed, and the first data unit includes a fifth quantity of pilot symbols; and an $m^{th}$ time of retransmission of the second data unit is performed, and the second data unit includes a sixth quantity of pilot symbols, where m and k are integers greater than or equal to 0, a value of m is greater than a value of k, and the sixth quantity is greater than the fifth quantity.

In a possible implementation, the insertion rule of the pilot symbol includes: in a sequence from a frame header to a frame trailer, pilot symbols in the data frame are from dense to sparse.

In a possible implementation, the frame structure information of the data frame indicates that a frame structure of the data frame is a first frame format, and a length of a synchronization sequence in the first frame format is less than or equal to a length threshold.

In a possible implementation, the first frame format is a Bluetooth low energy frame format.

In a possible implementation, the insertion rule of the pilot symbol includes: A plurality of consecutive pilot symbols are inserted each time.

In a possible implementation, the method is applied to a short-range wireless frequency hopping communication system.

According to a third aspect, an embodiment of this application provides a communication apparatus. The communication apparatus includes a processor, configured to perform the method in any possible implementation of the first aspect. Alternatively, the processor is configured to execute a program stored in a memory. When the program is executed, the method in any possible implementation of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive or send a signal.

According to a fourth aspect, an embodiment of this application provides a communication apparatus. The communication apparatus includes a logic circuit and an interface. The logic circuit is coupled to the interface. The interface is configured to receive information, and the logic circuit is configured to perform a processing operation.

According to a fifth aspect, an embodiment of this application provides a computer-readable storage medium. The computer-readable storage medium is configured to store a computer program. When the computer program is run on a computer, the method shown in any possible implementation of the first aspect is performed.

According to a sixth aspect, an embodiment of this application provides a computer program product. The computer program product includes a computer program or computer code. When the computer program product runs on a computer, the method shown in any possible implementation of the first aspect is performed.

According to a seventh aspect, an embodiment of this application provides a computer program. When the computer program is run on a computer, the method shown in any possible implementation of the first aspect is performed.

For technical effects achieved in the second aspect to the seventh aspect, refer to the technical effects of the first aspect or beneficial effects in the following method embodiments. Details are not described herein again.

## BRIEF DESCRIPTION OF DRAWINGS

FIG. 1a is a diagram of a communication system according to an embodiment of this application;
FIG. 1b is a diagram of another communication system according to an embodiment of this application;
FIG. 2a is a diagram of a frame format according to an embodiment of this application;
FIG. 2b is a diagram of another frame format according to an embodiment of this application;
FIG. 2c is a diagram of still another frame format according to an embodiment of this application;
FIG. 3 is a schematic flowchart of a data transmission method according to an embodiment of this application;
FIG. 4 is a diagram of pilot symbol insertion according to an embodiment of this application;
FIG. 5a and FIG. 5b are diagrams of scenarios according to embodiments of this application;
FIG. 6 is a diagram of data frame retransmission according to an embodiment of this application;
FIG. 7 is a diagram of pilot symbol insertion according to an embodiment of this application;
FIG. 8 is a diagram of pilot symbol insertion for aggregation of a plurality of data blocks according to an embodiment of this application;
FIG. 9 is a diagram of pilot symbol insertion for aggregation of a plurality of frames according to an embodiment of this application;
FIG. 10 is a diagram of a relationship between a Doppler bandwidth and channel coherence time according to an embodiment of this application;
FIG. 11 is a diagram of obtaining channel coherence time according to an embodiment of this application;
FIG. 12 is a diagram of pilot symbol insertion for aggregation of a plurality of frames according to an embodiment of this application;
FIG. 13 is a diagram of a Bluetooth low energy frame format according to an embodiment of this application;
FIG. 14 is a diagram of pilot symbol insertion according to an embodiment of this application;
FIG. 15 is a diagram of residual error convergence according to an embodiment of this application;

FIG. 16 is a diagram of pilot symbol insertion according to an embodiment of this application; and

FIG. 17 to FIG. 19 are diagrams of structures of communication apparatuses according to embodiments of this application.

## DESCRIPTION OF EMBODIMENTS

To make objectives, technical solutions, and advantages of this application clearer, this application is further described below with reference to the accompanying drawings.

Terms "first", "second", and the like in the specification, claims, and accompanying drawings of this application are merely used to distinguish between different objects, and are not used to describe a specific order. In addition, the terms "including" and "having" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that particular features, structures, or characteristics described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with another embodiment.

In this application, "at least one (item)" means one or more, "a plurality of" means two or more, "at least two (items)" means two, three, or more, and "and/or" is used to describe an association relationship between associated objects, and indicates that three relationships may exist. For example, "A and/or B" may indicate the following three cases: Only A exists, only B exists, and both A and B exist. A and B may be singular or plural. The character "/" generally indicates an "or" relationship between the associated objects. "At least one of the following" or a similar expression thereof means any combination of these items. For example, at least one of a, b, and c may represent a, b, c, "a and b", "a and c", "b and c", or "a, b, and c".

This application may be applied to protocol frameworks of a plurality of types of wireless communication systems. The wireless communication system may include but is not limited to a short-range wireless frequency hopping communication system, and the short-range wireless frequency hopping communication system may include a Bluetooth communication system. It may be understood that this application may alternatively be applied to another wireless communication system, for example, a long term evolution (long term evolution, LTE) system, a new radio access technology (new radio access technology, NR) system, or a future-evolved communication system. The future-evolved communication system is, for example, a future network or a sixth generation communication system.

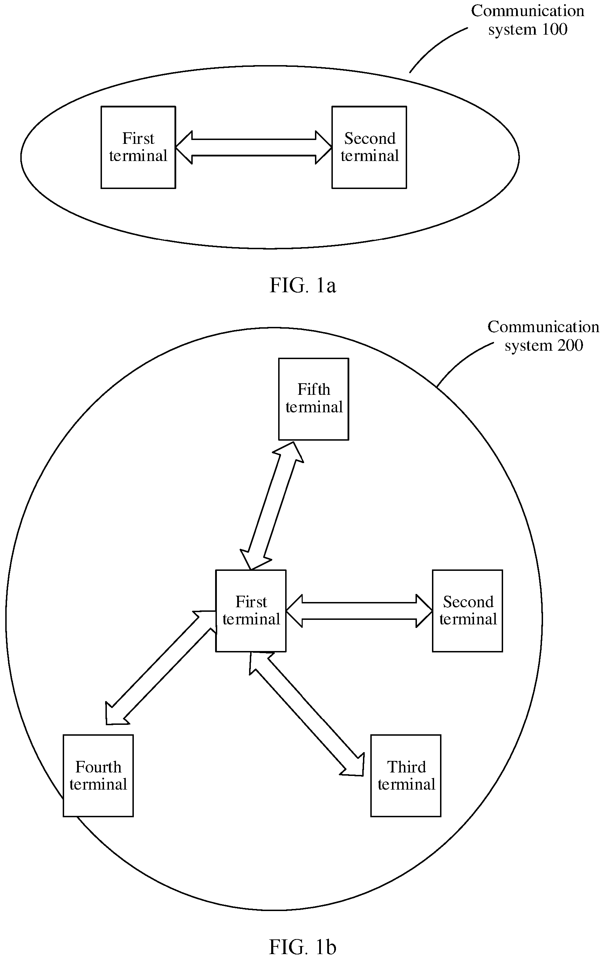

FIG. 1a is a diagram of a communication system according to an embodiment of this application. As shown in FIG. 1a, a communication system 100 includes a first terminal and a second terminal, and point-to-point transmission is performed between the first terminal and the second terminal. FIG. 1b is a diagram of another communication system according to an embodiment of this application. As shown in FIG. 1b, a first terminal in a communication system 200 can separately perform point-to-point transmission with a second terminal, a third terminal, a fourth terminal, and a fifth terminal. It may be understood that quantities of terminal devices included in FIG. 1a and FIG. 1b are merely examples, and a quantity of terminal devices is not limited in this application.

In some scenarios, terminal devices may be distinguished between a master device (master) and a slave device (slave) that belongs to the master device. Usually, the master device may a device that initiates a communication connection, and the slave device may be a device that receives the communication connection. As shown in a system architecture in FIG. 1a, the first terminal may be a master device (master), and the second terminal may be a slave device (slave). It may be understood that, alternatively, the second terminal may be a master device (master), and the first terminal may be a slave device (slave). As shown in FIG. 1b, the first terminal may be a master device (master), and another terminal may be a slave device (slave). There may be one or more slave devices. In a system architecture shown in FIG. 1b, the first terminal may initiate communication connections to a plurality of terminals, and the communication connection may be a Bluetooth connection.

In embodiments of this application, a terminal device is a device having a wireless transceiver function, and is also referred to as user equipment (user equipment, UE), a mobile station (mobile station, MS), a mobile terminal (mobile terminal, MT), or the like. The terminal device refers to a device that provides a user with voice and/or data connectivity, and also includes a device that can perform sidelink communication, for example, a vehicle-mounted terminal, or a portable terminal that can perform V2X communication. The terminal device may be deployed on land, and includes an indoor or outdoor device, a handheld device, or a vehicle-mounted device; or may be deployed on water (for example, on a ship); or may be deployed in the air (for example, on an aircraft, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, an XR device, or the like. An application scenario is not limited in embodiments of this application. The terminal device sometimes may also be referred to as a terminal, user equipment (user equipment, UE), an access terminal device, a vehicle-mounted terminal, an industrial control terminal, a UE unit, a UE station, a mobile station, a remote station, a remote terminal device, a mobile device, a UE agent, a UE apparatus, or the like. The terminal device may be fixed or mobile.

For example, in a scenario, a master device (master) may be a smartphone, and a slave device (slave) may include a headset, a watch, a wearable device, a speaker, and the like. In another scenario, a master device may be a monitoring device, and a slave device (slave) may be a battery in a battery group. In still another scenario, a master device may be a smartphone, and a slave device (slave) may be various home internet of things devices, such as a washing machine, a refrigerator, and an air conditioner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and emergence of a new service scenario, the technical solutions provided in embodiments of this application are also applicable to similar technical problems.

Before a data transmission method in this application is described, some concepts involved in this application are first described.

Frame format of a data frame

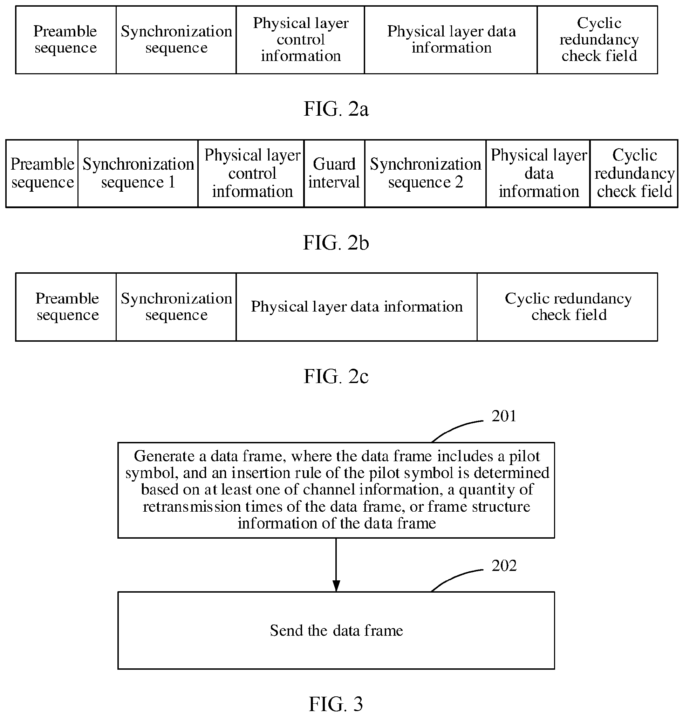

Bluetooth frame formats shown in FIG. 2a to FIG. 2c are used below as examples for description. It may be understood that the data frame in this application may alternatively be another frame, and the Bluetooth frame formats shown in FIG. 2a to FIG. 2c are merely examples.

As shown in FIG. 2a to FIG. 2c, there is a preamble sequence at a beginning of each frame, and the preamble sequence is for automatic gain control (Automatic Gain Control, AGC) adjustment and signal processing. Then, there is a synchronization sequence, and the synchronization sequence is for frame synchronization. The synchronization is successful only after a receive end successfully receives a synchronization sequence field, and the receive end continues to receive a subsequent field. If an error occurs during the reception of the synchronization sequence field, the synchronization fails, and the subsequent field is not received. As a result, the frame is lost. There are some other fields after the synchronization sequence field. A data information part is a main part, and is responsible for transmission of user information.

FIG. 2a shows a Bluetooth basic rate frame format. In the frame format, physical layer control information is closely followed by a synchronization sequence, and physical layer data information is followed by the physical layer control information. FIG. 2b shows a Bluetooth enhanced rate frame format. In the frame improvement, two synchronization sequences, namely, a synchronization sequence 1 and a synchronization sequence 2, are included. The synchronization sequence 1 is located before physical layer control information, and the synchronization sequence 2 is located before physical layer data information. FIG. 2c shows a Bluetooth low energy frame format, and the frame format does not include physical layer control information.

In embodiments of this application, a pilot symbol is inserted into a data frame to perform channel estimation and tracking. The pilot symbol is a known symbol, and can be known at a receive end without demodulation. Therefore, a receiving failure is not caused by channel distortion, and the pilot symbol can be used for channel estimation and tracking. In some embodiments, the pilot symbol may be added to physical layer data information and/or physical layer control information.

The following describes embodiments of the data transmission method in this application by using examples. The technical solutions (or referred to as embodiments) in this application may be independently implemented or may be implemented in combination based on some internal relationships. This is not limited in this application. In addition, various terms and definitions in embodiments may be mutually referenced. In each embodiment of this application, different implementations may be implemented in combination or independently implemented.

FIG. 3 is a schematic flowchart of a data transmission method according to an embodiment of this application. FIG. 1a and FIG. 1b may be diagrams of system architectures to which the data transmission method is applicable. As shown in FIG. 3, the method may include 201 and 202. An execution sequence of the steps is not limited in this embodiment of this application. As shown in the figure, the data transmission method in this embodiment of this application includes but is not limited to the following steps:

201: Generate a data frame, where the data frame includes a pilot symbol, and an insertion rule of the pilot symbol is determined based on at least one of channel information, a quantity of retransmission times of the data frame, or frame structure information of the data frame.

202: Send the data frame.

The pilot symbol in this embodiment of this application may also be referred to as a training sequence. A name is not limited in this application. The pilot symbol is for channel estimation and channel tracking.

A terminal device inserts one or more pilot symbols into the data frame, and sends the data frame. The insertion rule of the pilot symbol is determined based on at least one of the channel information, the quantity of retransmission times of the data frame, or a frame structure of the data frame. The channel information may include at least one of a channel interference power, channel state change speed information, a channel bandwidth, or a channel multipath interference strength.

The following describes the insertion rule of the pilot symbol by using examples.

Insertion rule 1: Transmission of the data frame is performed on a first channel, and a higher interference power of the first channel indicates a larger quantity of pilot symbols included in the data frame. In an implementation, a higher interference power of the first channel indicates a higher density of the pilot symbols in the data frame. In another implementation, a higher interference power of the first channel indicates a smaller value of $R_i$, where $R_i$ is a ratio of a quantity $D_i$ of data symbols to the quantity $P_i$ of pilot symbols, and a formula is as follows:

$$R_i = \frac{D_i}{P_i}$$

For example, when a channel interference power of the first channel falls within a first power range, the data frame includes a first quantity of pilot symbols; and when the channel interference power of the first channel falls within a second power range, the data frame includes a second quantity of pilot symbols, where all power values in the second power range are greater than all power values in the first power range, and the second quantity is greater than the first quantity.

For example, pilot densities respectively corresponding to a plurality of power ranges are preset, one power range corresponds to one pilot density, and there is no intersection between the plurality of power ranges. When a pilot is inserted, a power range within which the channel interference power of the first channel falls is determined, and a pilot density corresponding to the power range is determined, to insert a pilot symbol into the data frame by using the pilot density. It may be understood that intervals between pilot symbols may be the same or different. This is not limited in this application. In this embodiment of this application, a higher pilot density may be understood as more inserted pilot symbols.

The first channel may include one or more frequency domain channels. A short-range frequency hopping system is used as an example, where a 2.4 GHz frequency band is divided into 79 frequency domain channels, an interval between adjacent frequency domain channels is 1 MHz, and

$$f = 2402 + k\,\text{MHz}, k = 0\,,\dots\,,78$$

Because of frequency hopping transmission, a frequency domain channel for each time of transmission changes, frequency domain channels of different data frames may be different, and switching is performed between the 79 frequency domain channels. Channel interference powers between the frequency domain channels may be different. In this embodiment of this application, the channel interference power of the first channel for transmission of the data frame needs to be determined, to determine, based on the interference power strength of the first channel, the quantity of inserted pilot symbols or the pilot density. Interference to a current carrier channel is strong, and anti-interference performance can be improved by increasing the pilot density or increasing the quantity of pilot symbols. On the contrary, overheads can be reduced by reducing the pilot density or reducing the quantity of pilot symbols.

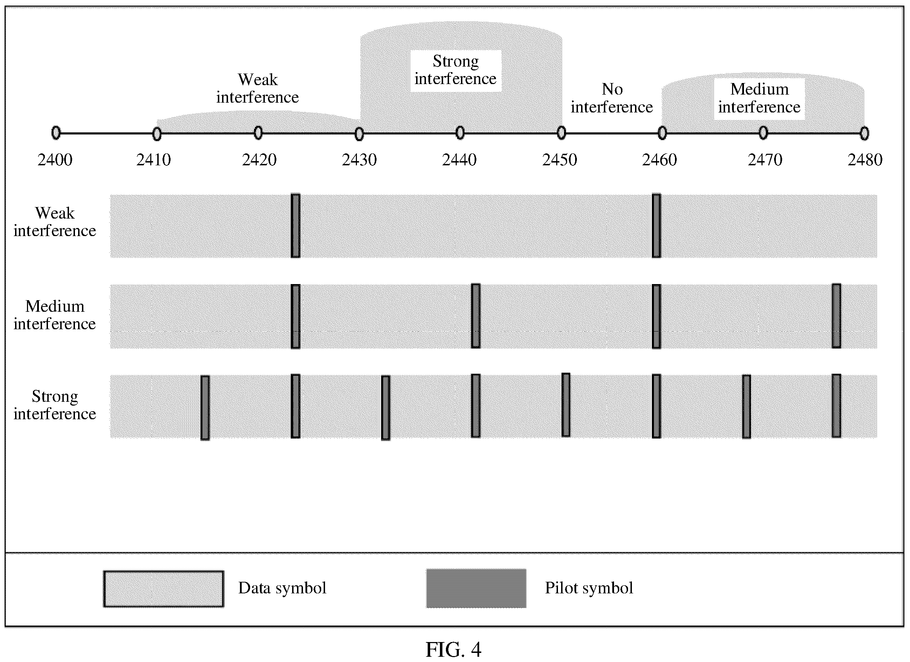

FIG. 4 is a diagram of a relationship between a channel interference power strength and a pilot density (or a quantity of pilot symbols) in a data frame according to an embodiment of this application. As shown in FIG. 4, in a scenario of strong interference, a quantity of inserted pilot symbols is the largest (or a pilot density is the highest); in a scenario of weak interference, a quantity of inserted pilot symbols is the smallest (or a pilot density is the lowest); and in a scenario of medium interference, a quantity of inserted pilot symbols is between the quantity of pilot symbols corresponding to the strong interference and the quantity of pilot symbols corresponding to the weak interference. In other words, a larger interference power indicates a larger quantity of inserted pilot symbols (or a higher pilot density).

After the pilot symbol is inserted, a transmitted signal may be expressed as:

$$s(t) = \sum_{n=1}^{N} I(n)g\left\{t - \left(n + \left\lfloor \frac{n}{R_i} \right\rfloor\right)T\right\} + \sum_{m=1}^{\lfloor N/R_i \rfloor} p(m)g(t - mR_iT)$$

$\lfloor * \rfloor$ represents to round down to the nearest integer, I(n) is a data symbol, p(m) is a pilot symbol, g(m) is a waveform shaping filter, T is a time length of a symbol, N represents a quantity of bits of sent information, $R_i$ represents a ratio of a quantity $D_i$ of data symbols to a quantity $P_i$ of pilot symbols in a case in which a signal is on an $i^{th}$ channel, and a smaller $R_i$ indicates a larger quantity of pilot symbols and a higher pilot density.

For example, a group of thresholds $\{0 \le h_0 \le h_1 \le h_2 \le ... \le h_k\}$ indicating interference power strengths and corresponding ratios $\{0 > r_0 > r_1 > r_2 > ... r_{k+1}\}$ may be preset. If an interference power of a current channel is $P_i$, a pilot symbol ratio of a current sent frame is selected as follows:

$$R_i = r_l, h_{l-1} < P_i \le h_l$$

An application scenario of the insertion rule 1 may be as follows: In a multi-user Bluetooth receiving and sending scenario, because many users simultaneously receive and send Bluetooth services, there are a large quantity of Bluetooth signals in space and the Bluetooth signals interfere with each other. Because Bluetooth uses frequency hopping, and interference strengths of different frequency domain channels are different, a quantity or density of inserted pilot symbols needs to be determined based on an interference power strength of a channel. It may be understood that the multi-user Bluetooth receiving and sending scenario is merely an example, and another application scenario may be used. This is not limited in this application.

Insertion rule 2: A larger quantity of retransmission times of the data frame indicates a larger quantity of pilot symbols included in the data frame. In an implementation, a larger quantity of retransmission times of the data frame indicates a higher density of the pilot symbols in the data frame. In another implementation, a larger quantity of retransmission times of the data frame indicates a smaller value of $R_i$. A larger quantity of retransmission times of the data frame may also be understood as stronger channel interference. Therefore, the quantity or the density of the pilot symbols in the data frame needs to be gradually increased, to improve anti-interference performance.

For example, when an $i^{th}$ time of retransmission of the data frame is performed, the data frame includes a third quantity of pilot symbols; and when a $j^{th}$ time of retransmission of the data frame is performed, the data frame includes a fourth quantity of pilot symbols, where i and j are integers greater than or equal to 0, a value of j is greater than a value of i, and the fourth quantity is greater than the third quantity. It may be understood that if the value of i or j is equal to 0, it indicates that transmission of the data frame is performed for a $1^{st}$ time. In some implementations, if the transmission of the data frame is performed for the $1^{st}$ time, no pilot symbol may be added.

In a possible implementation, a correspondence between the quantity of retransmission times and the quantity of pilot symbols inserted in the data frame, the density of the pilot symbols, or $R_i$ may be preset.

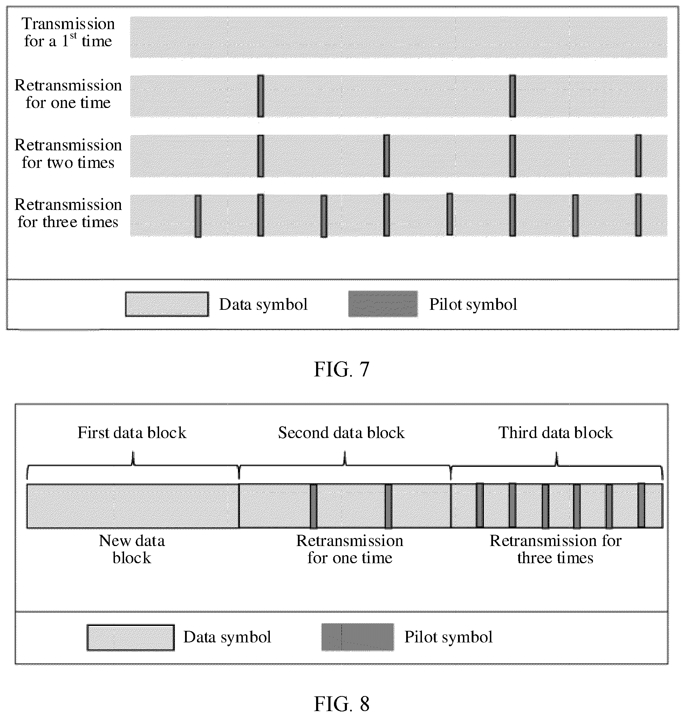

FIG. 7 shows an example of the correspondence between the quantity of retransmission times and the quantity of the inserted pilot symbols, the density of the pilot symbols, or $R_i$. As shown in FIG. 7, if the transmission of the data frame is performed for the $1^{st}$ time, no pilot symbol is added. If retransmission is performed for a $1^{st}$ time, in other words, retransmission is performed for one time, two pilot symbols are added. If retransmission is performed for a $2^{nd}$ time, in other words, retransmission is performed for two times, four pilot symbols are added. If retransmission is performed for a $3^{rd}$ time, in other words, retransmission is performed for three times, eight pilot symbols are added.

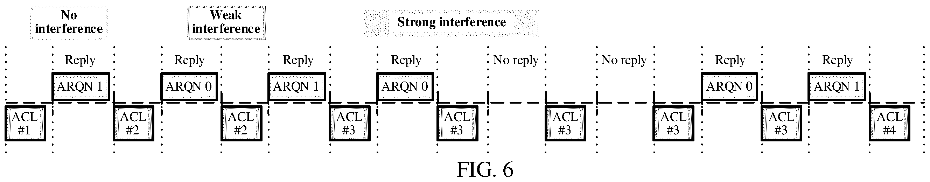

The following uses time division multiplexing scheduling data frame transmission as an example. The data frame may be an asynchronous connection-oriented logical (asynchronous connection-oriented logical, ACL) frame, and transmission of the data frame is performed in a specified slot. After transmission of a frame of data is completed, a reply is waited for in a corresponding slot. In control information of a reply frame, a one-bit automatic repeat request number (automatic repeat request number, ARQN) bit indicates whether a previous time of reception is successful. When the ARQN is equal to 1, it indicates that the previous time of reception is successful, and new data can be sent. When ARQN is equal to 0, it indicates that the previous time of reception fails, and data of a previous frame is resent. If the ARQN of the reply frame is always 0, an original data frame is resent until the ARQN of the reply frame is equal to 1. In another case, if no reply frame is received in a corresponding slot, it is considered that reception fails, and data of a previous frame is still resent. As shown in FIG. 6, a terminal device sends the ACL frame. When sending a third ACL frame, namely, ACL #3, because the ARQN of the reply frame is equal to 0 or no reply frame is received, the terminal device keeps performing retransmission of ACL #3 until the ARQN is equal to 1. As a quantity of retransmission times of ACL #3 increases, a quantity of pilot symbols included in ACL #3 or a density of the pilot symbols may be gradually increased.

After the pilot symbol is inserted, a transmitted signal may be expressed as:

$$s(t) = \sum_{n=1}^{N} I(n)g\left\{t - \left(n + \left\lfloor \frac{n}{R_i} \right\rfloor\right)T\right\} + \sum_{m=1}^{\lfloor N/R_i \rfloor} p(m)g(t - mR_i T)$$

$\lfloor * \rfloor$ represents to round down to the nearest integer, i represents a quantity of retransmission times, I(n) is a data symbol, p(m) is a pilot symbol, $R_i$ represents a ratio of the data symbol to the pilot symbol of the data frame whose retransmission is performed for the $i^{th}$ time, and g(m) is a waveform shaping filter.

As the quantity of retransmission times increases, a pilot density is higher, and $R_i$ is smaller, where $R_0$ represents $R_i$ in the first transmission, and a value thereof may be infinite. In other words, in the first transmission, no pilot symbol may be added, to reduce pilot overheads.

$$R_k < R_{k-1} < \ldots < R_2 < R_1 < R_0$$

In some implementations, the data frame may include a plurality of data units, and the quantity of retransmission times of the data frame may include a quantity of retransmission times corresponding to each data unit in the plurality of data units. When a pilot symbol is added to one data unit, a quantity of pilot symbols to be added to the data unit or a density of the pilot symbols may be determined based on a quantity of retransmission times corresponding to the data unit. For example, the data frame includes a first data unit and a second data unit. Retransmission of the first data unit is performed for a $k^{th}$ time, the first data unit includes a fifth quantity of pilot symbols, retransmission of the second data unit is performed for an $m^{th}$ time, and the second data unit includes a sixth quantity of pilot symbols, where m and k are integers greater than or equal to 0, a value of m is greater than a value of k, and the sixth quantity is greater than the fifth quantity. In other words, a larger quantity of retransmission times indicates a larger quantity of added pilots, a higher pilot density, or a smaller $R_i$.

In an example, the foregoing data unit may be a data block. For example, data in one frame is divided into blocks, and checking and retransmission of each data block are performed separately. A larger quantity of retransmission times of the data block indicates a larger quantity of pilot symbols added to the data block or a higher pilot density. As shown in FIG. 8, the data frame includes a first data block, a second data block, and a third data block. Because the first data block is a new data block, in other words, transmission of the first data block is performed for a $1^{st}$ time, no pilot symbol is added to the first data block. A quantity of retransmission times of the third data block is greater than a quantity of retransmission times of the second data block. Therefore, a quantity of pilot symbols added to the third data block is greater than a quantity of pilot symbols added to the second data block.

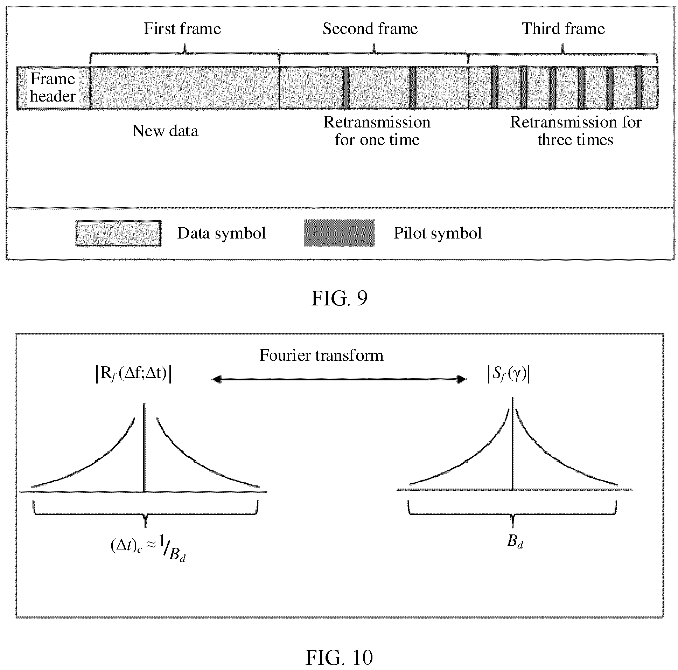

In another example, the foregoing data unit may be one frame of data, in other words, a plurality of frames are aggregated, and one frame header is shared. For the frame of data, a larger quantity of retransmission times of the frame of data indicates a larger quantity of pilot symbols added to the frame of data or a higher pilot density. As shown in FIG. 9, the data frame includes a first frame, a second frame, and a third frame. Because the first frame is new data, in other words, transmission of the first frame is performed for a $1^{st}$ time, no pilot symbol is added to the first frame. A quantity of retransmission times of the third frame is greater than a quantity of retransmission times of the second frame. Therefore, a quantity of pilot symbols added to the third frame is greater than a quantity of pilot symbols added to the second frame.

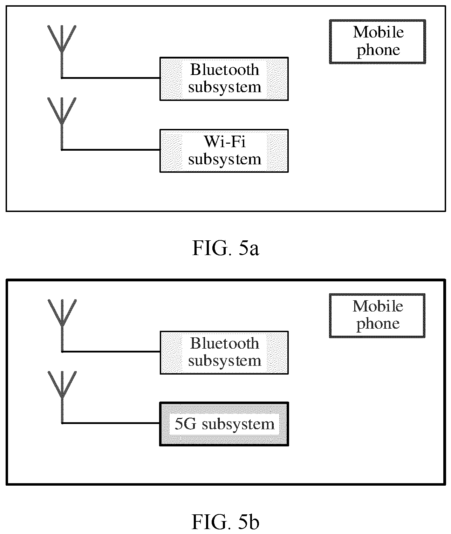

An application scenario of the insertion rule 2 may be a scenario in which a short-range wireless frequency hopping system (for example, Bluetooth) and a Wi-Fi or 5G subsystem coexist. It may be understood that the scenario is merely an example, and does not constitute a limitation on this application. This application may alternatively be applied to another scenario. In the scenario in which the short-range wireless frequency hopping system (for example, Bluetooth) and the Wi-Fi or 5G subsystem coexist, a user often simultaneously uses Wi-Fi and Bluetooth services, or simultaneously uses 5G and Bluetooth services. For example, Wi-Fi (or 5G) is used to watch video programs, and Bluetooth is simultaneously used to listen to audio signals. As shown in FIG. 5a and FIG. 5b, because both an antenna of the Bluetooth subsystem and an antenna of the Wi-Fi (or 5G) subsystem are located in a mobile phone and close to each other, a Wi-Fi (or 5G) signal may cause interference to Bluetooth. If the interference is very strong, a receiving error may be caused, and Bluetooth listening experience of the user is affected. As a result, a pilot symbol may be inserted into the data frame by using an insertion manner of the pilot symbol insertion rule 2, to resist the channel interference, improve receiving performance, and reduce pilot overheads to a maximum extent.

Insertion rule 3: Transmission of a data frame is performed on a first channel. When a channel state change speed indicated by channel state change speed information of the first channel is higher, a pilot symbol in the data frame is inserted at a smaller time interval, to adapt to a channel state change and update a channel estimation result in time. The channel state change speed information is information for measuring the channel state change speed. For example, the channel state change speed information may include but is not limited to a channel change speed, channel coherence time $(\Delta t)_c$, and the like. The channel coherence time may be understood as time needed for a channel change, and the time interval for inserting the pilot symbol in the data frame may be determined by the channel state change speed information. For example, if the channel state change speed information is the channel coherence time $(\Delta t)_c$, the time interval for inserting the pilot symbol is $r(\Delta t)_c$, where 0<r<1. It may be understood that r may alternatively be a value greater than or equal to 1. This is not limited in this application. In this manner, the pilot symbol may be inserted after the channel change to perform channel estimation, so that channel estimation is performed in time after the channel state change, and pilot overheads are reduced to a maximum extent. It may be understood that a quantity of pilot symbols inserted each time is not limited, and may be one or more.

For example, when the channel state change speed indicated by the channel state change speed information of the first channel is a first speed, the pilot symbol may be inserted at a first time interval; and when the channel state change speed indicated by the channel state change speed information of the first channel is a second speed, the pilot symbol may be inserted at a second time interval, where the second speed is higher than the first speed, and the second time interval is less than the first time interval.

The insertion rule 3 may be applied to a scenario in which a channel changes with time, for example, a movement scenario in which a user uses a wireless Bluetooth headset to listen to music while moving. At the same time, a Bluetooth watch (band) performs health monitoring. In this type of scenario, a channel changes with time. For example, a moving speed may cause a Doppler shift of the channel. An original channel estimation result is no longer applicable to a changed channel, and the channel needs to be continuously re-estimated to keep up with a channel change. Otherwise, receiving failure may be caused, and user experience is affected.

The following uses a channel model in a Bluetooth movement scenario as an example:

$$c(\tau; t) = \sum_n \alpha_n(t) e^{-j2\pi f \tau_n(t)} \delta[\tau - \tau_n(t)]$$

$\alpha_n(t)$ is an amplitude of a path of a multipath channel, $\tau_n(t)$ is a delay of the path, f is a carrier frequency of a signal, and $\delta[\tau]$ represents a unit impulse reply. $c(\tau; t)$ is a time domain model of the multipath channel, and is a function of time t and a delay $\tau$.

A Fourier transform of an autocorrelation function of the channel can be written in the following form:

$$R_f(\Delta f; \Delta t) = \iint\limits_{-\infty}^{\infty} E[c^*(\tau_1; t) c(\tau_2; t + \Delta t)] e^{2\pi(f_1\tau_1 - f_2\tau_2)} d\tau_1 d\tau_2$$

$$= \iint\limits_{-\infty}^{\infty} R(\tau_1; \Delta t) \delta(\tau_2 - \tau_1) e^{2\pi(f_1\tau_1 - f_2\tau_2)} d\tau_1 d\tau_2 = \int\limits_{-\infty}^{\infty} R(\tau_1; \Delta t) e^{-2\pi\Delta f\tau_1} d\tau_1$$

$R(\tau_1; \Delta t)$ is an autocorrelation function of $c(\tau; t)$, and $R_f(\Delta f; \Delta t)$ is a Fourier transform of $R(\tau_1; \Delta t)$.

When $\Delta f = 0$, a frequency expression of $R_f(\Delta f; \Delta t)$ can be written as follows:

$$S_f(\gamma) = \int\limits_{-\infty}^{\infty} R_f(0; \Delta t) e^{-2\pi\gamma\Delta t} d\Delta t$$

$|S_f(\gamma)|$ is not a total length of a part of 0, but is a channel Doppler bandwidth $B_d$. A reciprocal of $B_d$ is approximately equal to the time required for the channel change, in other words, the channel coherence time $(\Delta t)_c \approx {}^1\!/_{B_d}$. FIG. 10 is a diagram of a relationship between a channel coherence time $(\Delta t)_c$ and a channel Doppler bandwidth $B_d$.

After the channel coherence time $(\Delta t)_c$ indicating the change speed of the channel is obtained, one or more pilot symbols may be inserted at an interval of $r(\Delta t)_c$, to re-estimate a channel parameter, where $0 < r \leq 1$. In another case, a pilot is not inserted, to reduce overall pilot overheads. In this case, a mathematical expression of a sent signal may be written as:

$$s(t) = \sum_n I(n) g(t - k_n T)$$

$$+ \sum_{m_1} p(m_1) g(t - (m_1 + L)T)$$

$$+ \sum_{m_2} p(m_2) g(t - (m_2 + 2L)T) + \ldots + \sum_{m_l} p(m_l) g(t - (m_l + lL)T)$$

$I(n)$ is a data symbol, $p(m)$ is a pilot symbol, $g(m)$ is a waveform shaping filter, T is a time length of one symbol, where $k_n$ is a positive integer counted from 1, m is a quantity of pilot symbols, and $k_n \notin \{m_1\} \cup \{m_2\} \cup \ldots \cup \{m_l\}$. In addition, (L

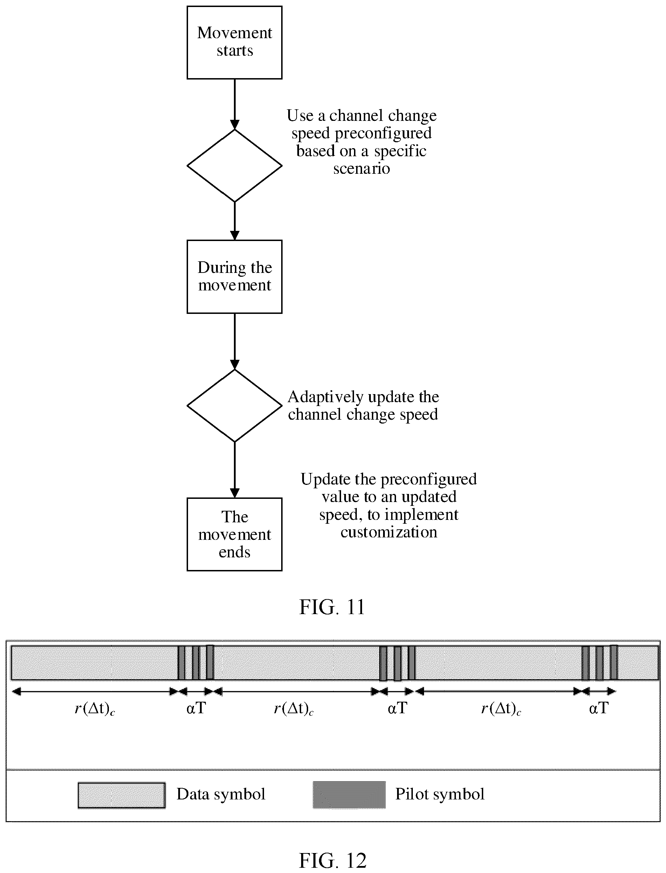

$-\alpha)T = r(\Delta t)_c$, where $\alpha T$ is a length of a data symbol and a pilot symbol that currently include a pilot part, and $0 < r < 1$. FIG. 12 is a diagram of pilot symbol insertion. As shown in the figure, a pilot is inserted each time at an interval of $r(\Delta t)_c$, and there may be one or more pilot symbols inserted at one time. This is not limited in this application.

A manner of obtaining channel state change information is not limited in this application. The following describes two manners of obtaining the channel state change information by using examples.

In an example, a physical layer of a terminal device adaptively measures a speed at which a channel state changes. For example, the physical layer traces an important channel parameter in real time and observes time required for an evident change. For example, a frequency offset and a phase offset of the channel are traced and observed. If a channel is characterized by a multipath channel, an estimation result of the multipath channel can be traced.

In another example, determining may be performed based on an upper-layer application scenario. For example, when listening to music, the user opens fitness-related application software, and it can be determined that the current user is performing fitness while listening to music. In this specific application scenario, the channel change speed is generally within a small range, and can be obtained by using big data statistics collection, and is stored in the terminal device in advance.

Preconfiguration based on the application scenario may further be combined with physical layer adaptive update, to obtain a more accurate channel change speed, implement customization for the user, and improve user experience. As shown in FIG. 11, when the user starts to move, a preconfigured channel change speed corresponding to the specific scenario obtained by using big data may be used. In a movement process of the user, the channel parameter is continuously tracked in real time, to obtain time when the channel parameter actually changes evidently, so as to adaptively update the channel change speed. After the movement ends, the preconfigured value (to be specific, the preconfigured channel change speed) is updated to an updated speed, so that the preset channel change speed is more matching with a personal situation of the user, customized adaptation is performed for each user, and user experience is improved.

Insertion rule 4: In a sequence from a frame header to a frame trailer, pilot symbols in a data frame are from dense to sparse, so that an error of a channel estimation result quickly converges. For example, a pilot symbol density may be reduced exponentially.

In some implementations, when frame result information of the data frame indicates that a frame structure of the data frame is a first frame format, the insertion rule 4 is used to insert a pilot symbol into the data frame. A synchronization sequence in the first frame format is short. For example, a length of the synchronization sequence in the first frame format is less than or equal to a length threshold. For example, the first frame format is a Bluetooth low energy frame format.

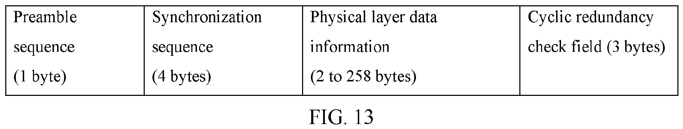

In some embodiments, the synchronization sequence of the data frame can be for frame synchronization and channel estimation. The synchronization sequence is short. For example, as shown in FIG. 13, the synchronization sequence in the Bluetooth low energy frame format has only four bytes. In a case of a low signal-to-noise ratio near a sensitivity, the channel estimation is inaccurate, and there is a large residual error. In a case of strong interference, the channel estimation is inaccurate, and there is a large residual error.

In one solution, the synchronization sequence is lengthened, and accuracy of the channel estimation is increased in the case of the low signal-to-noise ratio or the strong interference. However, a longer synchronization sequence means more overheads, and a throughput is affected. In addition, the synchronization sequence can only perform one-time channel estimation in the frame header, and cannot track and update a channel change.

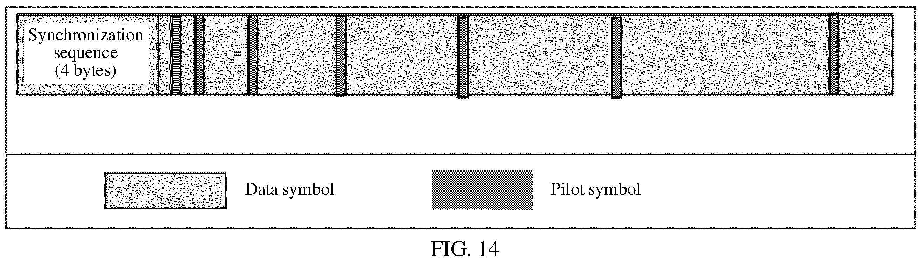

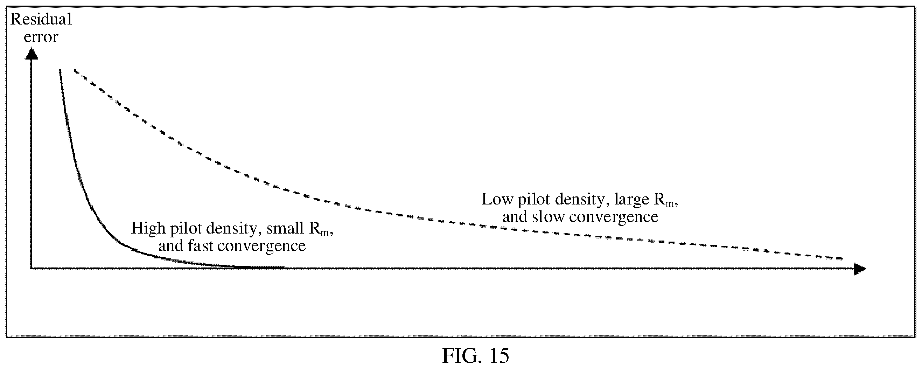

In this embodiment of this application, a pilot symbol may be inserted into "physical layer data information" of the data frame, and then the channel estimation is corrected by using the pilot symbol, so that a residual error estimated by using the synchronization sequence gradually converges to a degree that can be ignored. It may be understood that, the pilot symbol may alternatively be inserted not only into the "physical layer data information". The foregoing is merely an example. Further, a variable pilot density can be used, and more pilot symbols are inserted near a frame header part. In other words, the pilot density is high, so that a residual error correction speed can be increased, and the convergence can be faster. After the convergence, a quantity of inserted pilot symbols can be reduced, in other words, the pilot density is reduced, or no pilot symbol is inserted, to reduce overall pilot overheads. FIG. 15 is a diagram of a relationship between the residual error and $R_m$, where $R_m$ is a ratio of a data symbol to a pilot symbol. As shown in FIG. 15, a smaller value of $R_m$, in other words, a higher pilot density, indicates a faster residual error convergence speed. Therefore, in this application, near the frame header part, a large quantity of pilot symbols are inserted, in other words, there is a high pilot density, so that the residual error converges quickly. FIG. 14 is a diagram of pilot symbol insertion. From the frame header to the frame trailer, the pilot density becomes lower.

For example, the pilot density may be adjusted and reduced exponentially. A ratio of a quantity of the data symbols to a quantity of the pilot symbols may be expressed as:

$$\{0 < R_1 < R_2 < R_3 < \ldots < R_k\}$$

A change of $R_m$ is an exponential increase, in other words, $R_m = C * 2^m$, where m is a quantity of times of inserting the pilot symbol, in other words, an $m^{th}$ time of inserting the pilot symbol. C is an adjustable constant. In this case, a transmitted signal may be represented as:

$$s(t) = \sum_{n=1}^{N} I(n)g\{t - (n + k)T\} + \sum_{m=1}^{\lfloor N/R_i \rfloor} p(m)g(t - mR_mT)$$

Insertion rule 5: When a pilot symbol is inserted into a data frame, a plurality of consecutive pilot symbols are inserted each time.

In an example, when a channel bandwidth of a first channel for transmission the data frame is greater than or equal to a bandwidth threshold, the plurality of pilot symbols may be inserted each time. For example, a larger channel bandwidth indicates a larger quantity of consecutive pilot symbols inserted each time. For example, when the channel bandwidth of the first channel is a first bandwidth, M1 consecutive pilot symbols are inserted each time; and when the channel bandwidth of the first channel is a second bandwidth, M2 consecutive pilot symbols are inserted each time, where M1 and M2 are integers greater than 1, the second bandwidth is greater than the first bandwidth, and a value of M2 is greater than a value of M1.

In another example, when a channel multipath interference strength of the first channel for transmitting the data frame is greater than or equal to a multipath interference strength threshold, a plurality of consecutive pilot symbols may be inserted each time. For example, a larger channel multipath interference strength indicates a larger quantity of consecutive pilot symbols inserted each time. For example, when the channel multipath interference strength of the first channel is a first strength, K1 consecutive pilot symbols are inserted each time; and when the channel multipath interference strength of the first channel is a second strength, K2 consecutive pilot symbols are inserted each time, where K1 and K2 are integers greater than 1, the second strength is greater than the first strength, and a value of K2 is greater than a value of K1.

In the insertion rule 5, when the channel bandwidth is wide or the channel multipath interference strength is strong, the channel presents an evident multipath effect, and inter-code interference occurs, so that receiving performance is reduced. As a result, an equalizer is usually used to perform a time domain equalization algorithm, to implement an anti-multipath effect. Each time a tap coefficient in the equalizer is trained, the training needs to be performed by using a pilot symbol. Therefore, inserting the plurality of consecutive pilot symbols each time may facilitate the training of the tap coefficient of the equalizer.

For example, a short-range wireless frequency hopping system like Bluetooth mainly uses a 1 MHz bandwidth at the beginning. To achieve a higher transmission rate and provide better listening experience for a user, the channel bandwidth is gradually increased to 2 MHz and evolved to 4 MHz. When a signal bandwidth reaches 2 MHz or higher, the channel presents an evident multipath effect, and user experience is affected.

The following uses an example to describe how to perform time domain equalization processing by using a time domain equalization algorithm by using the equalizer.

A received signal passing through the multipath channel may be represented as:

$$y(t) = \int_{-\infty}^{\infty} c(\tau; t)s(t - \tau)d\tau$$

$c(\tau; t)$ is a multipath channel model and a function of time t and a delay $\tau$, s(t) is a sent signal, and y(t) is a received signal. The received signal passing through the multipath channel may alternatively be represented as

$$c(\tau; t) = \sum_{n} \alpha_n(t)e^{-j2\pi f\tau_n(t)}\delta[\tau - \tau_n(t)]$$

$\alpha_n(t)$ is an amplitude of a path of the multipath channel, $\tau_n(t)$ is a delay of the path, f is a carrier frequency of a signal, and $\delta[\tau]$ represents a unit impulse reply.

A span of the multipath channel in time domain is:

$$\tau_{max}(t_0) = \underset{\tau}{\mathrm{argmax}}\{|c(\tau; t)| > 0|_{t=t_0}\}$$

The span of the multipath channel in time domain may indicate a quantity of symbols before and after the multipath channel. A length of one symbol is T, and the span in time domain is:

$$L(t_0) = \frac{\tau_{max}(t_0)}{T}$$

A common method of anti-multipath is to use the equalizer. For a feature that Bluetooth has only one carrier, a time domain equalization algorithm is generally used. A mathematical expression of the equalizer is as follows:

$$z(n) = \sum_{n=-L}^{L} y(n) * \alpha(n)$$

y(n) is a receiving symbol, there is inter-code interference, and is used as an input of the equalizer. z(n) is an equalized output. After processing, there is no inter-code interference. $\alpha$(n) is a tap coefficient of the equalizer, is determined by using a specific channel feature, and is obtained through estimation by using a synchronization sequence or a pilot symbol. A length of the equalizer is 2L+1, and L corresponds to the span of a multipath channel in time domain. Generally, a higher signal bandwidth indicates a larger L.

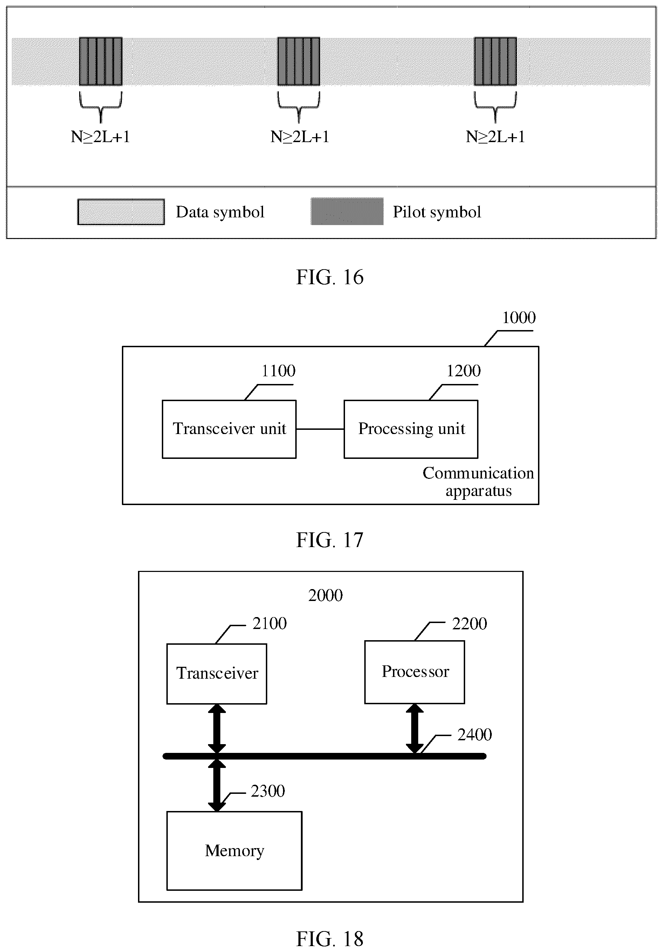

It can be learned from the foregoing that each time the tap coefficient of the equalizer is trained and updated, at least 2L+1 consecutive receiving symbols are needed. In this embodiment of this application, to facilitate the training of the equalizer, a plurality of consecutive pilot symbols are inserted each time. As shown in FIG. 16, a quantity of consecutive pilot symbols inserted each time may be N, and a value of N may be greater than or equal to 2L+1, to implement training and updating of a tap system of the equalizer each time. It may be understood that a value of N in FIG. 16 is merely an example, or may be another value less than 2L+1 and greater than 1. This is not limited in this application.

In some implementation scenarios, a measure of the span L of the multipath channel in the time domain may be obtained in a power-on calibration manner and/or in an adaptive update manner. The two methods may be combined. A preconfigured value of power-on calibration may be updated to a final result of each time of adaptation.

It may be understood that the insertion rule 1 to the insertion rule 5 may be separately implemented or may be implemented in combination. For example, the insertion rule 5 may be combined with the insertion rule 1 to the insertion rule 4, in other words, there may be a plurality of consecutive pilot symbols inserted each time in the insertion rule 1 to the insertion rule 4. For another example, the insertion rule 1 and the insertion rule 2 may be used in combination in some scenarios. For example, after a pilot symbol is inserted into a data frame based on the insertion rule 1, if the insertion still fails, the pilot symbol may be inserted based on the pilot symbol insertion rule 2 corresponding to a quantity of retransmission times, to avoid a sending failure caused by another factor other than channel interference. In addition, the insertion rule 3 may be used in combination with the insertion rule 1, the insertion rule 2, and the insertion rule 5. For example, the insertion rule 3 and the insertion rule 5 are used in combination. When the insertion rule 5 restricts that there are a plurality of consecutive pilot symbols inserted each time, a time interval for inserting pilot symbols each time may be determined based on a channel change speed, in other words, the insertion rule 3 is used to determine the time interval for inserting pilot symbols. The foregoing rules can be flexibly combined based on some scenarios. The foregoing combination is merely an example, and is not limited in this application.

The following describes communication apparatuses provided in embodiments of this application.

In this application, the communication apparatus is divided into functional modules based on the foregoing method embodiments. For example, division of the functional modules may be performed in correspondence to corresponding functions, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 17 to FIG. 19.

FIG. 17 is a diagram of a structure of a communication apparatus according to an embodiment of this application. As shown in FIG. 17, a communication apparatus 1000 may correspondingly implement functions or steps implemented by the terminal device in the foregoing method embodiments. The communication apparatus may include a processing unit 1200 and a transceiver unit 1100. Optionally, the communication apparatus may further include a storage unit. The storage unit may be configured to store instructions (code or a program) and/or data. The processing unit 1200 and the transceiver unit 1100 may be coupled to the storage unit. For example, the processing unit 1200 may read the instructions (the code or the program) and/or the data in the storage unit, to implement a corresponding method. The foregoing units may be independently disposed, or may be partially or completely integrated. For example, the transceiver unit 1100 may include a sending unit and a receiving unit. The sending unit may be a transmitter, and the receiving unit may be a receiver. An entity corresponding to the transceiver unit 1100 may be a transceiver.

In some possible implementations, the communication apparatus 1000 can correspondingly implement behavior and functions of the terminal device in the foregoing method embodiments. For example, the communication apparatus 1000 may be a terminal device, or may be a component (for example, a chip or a circuit) used in the terminal device. For example, the transceiver unit 1100 may be configured to perform all receiving or sending operations performed by a terminal device in the embodiment in FIG. 3, for example, step 202 in FIG. 3 and/or another process for supporting a technology described in this specification. The processing unit 1200 is configured to perform all operations performed by the terminal device in the embodiment in FIG. 3 except the receiving and sending operations, for example, step 201 in the embodiment shown in FIG. 3.

In a possible design, the communication apparatus 1000 includes the processing unit 1200 and the transceiver unit 1100.

The processing unit 1200 is configured to generate a data frame, where the data frame includes a pilot symbol, and an insertion rule of the pilot symbol is determined based on at least one of channel information, a quantity of retransmission times of the data frame, or frame structure information of the data frame.

The transceiver unit 1100 is configured to send the data frame.

For example, the channel information includes at least one of a channel interference power, channel state change speed information, a channel bandwidth, or a channel multipath interference strength.

For example, transmission of the data frame is performed on a first channel; and
the insertion rule of the pilot symbol includes: when a channel interference power of the first channel falls within a first power range, the data frame includes a first quantity of pilot symbols; and when the channel interference power of the first channel falls within a second power range, the data frame includes a second quantity of pilot symbols, where all power values in the second power range are greater than all power values in the first power range, and the second quantity is greater than the first quantity.

For example, transmission of the data frame is performed on a first channel; and
the insertion rule of the pilot symbol includes: when a channel state change speed indicated by channel state change speed information of the first channel is a first speed, the pilot symbol is inserted at a first time interval; and when the channel state change speed indicated by the channel state change speed information of the first channel is a second speed, the pilot symbol is inserted at a second time interval, where the second speed is higher than the first speed, and the second time interval is less than the first time interval.

For example, transmission of the data frame is performed on a first channel; and
the insertion rule of the pilot symbol includes: when a channel bandwidth of the first channel is a first bandwidth, M1 consecutive pilot symbols are inserted each time; and when the channel bandwidth of the first channel is a second bandwidth, M2 consecutive pilot symbols are inserted each time, where M1 and M2 are integers greater than 1, the second bandwidth is greater than the first bandwidth, and a value of M2 is greater than a value of M1.

For example, the channel bandwidth of the first channel is greater than or equal to a bandwidth threshold.

For example, transmission of the data frame is performed on a first channel; and
the insertion rule of the pilot symbol includes: when a channel multipath interference strength of the first channel is a first strength, K1 consecutive pilot symbols are inserted each time; and when the channel multipath interference strength of the first channel is a second strength, K2 consecutive pilot symbols are inserted each time, where K1 and K2 are integers greater than 1, the second strength is greater than the first strength, and a value of K2 is greater than a value of K1.

For example, the channel multipath interference strength of the first channel is greater than or equal to a multipath interference strength threshold.

For example, the insertion rule of the pilot symbol includes: when an $i^{th}$ time of retransmission of the data frame is performed, the data frame includes a third quantity of pilot symbols; and when a $j^{th}$ time of retransmission of the data frame is performed, the data frame includes a fourth quantity of pilot symbols, where i and j are integers greater than or equal to 0, a value of j is greater than a value of i, and the fourth quantity is greater than the third quantity.

For example, the data frame includes a plurality of data units, and the quantity of retransmission times of the data frame includes quantities of retransmission times respectively corresponding to the plurality of data transmission units, where the plurality of data units include a first data unit and a second data unit; and
the insertion rule of the pilot symbol includes: a $k^{th}$ time of retransmission of the first data unit is performed, and the first data unit includes a fifth quantity of pilot symbols; and an $m^{th}$ time of retransmission of the second data unit is performed, and the second data unit includes a sixth quantity of pilot symbols, where m and k are integers greater than or equal to 0, a value of m is greater than a value of k, and the sixth quantity is greater than the fifth quantity.

For example, the insertion rule of the pilot symbol includes: in a sequence from a frame header to a frame trailer, pilot symbols in the data frame are from dense to sparse.

For example, the frame structure information of the data frame indicates that a frame structure of the data frame is a first frame format, and a length of a synchronization sequence in the first frame format is less than or equal to a length threshold.

For example, the first frame format is a Bluetooth low energy frame format.

For example, the insertion rule of the pilot symbol includes: A plurality of consecutive pilot symbols are inserted each time.

For example, the method is applied to a short-range wireless frequency hopping communication system.

The foregoing describes the terminal device in embodiments of this application, and the following describes possible product forms of the terminal device. It should be understood that any product in any form having functions of the terminal device described in FIG. 17 falls within the protection scope of embodiments of this application. It should be further understood that the following descriptions are merely examples, and a product form of the terminal device in embodiments of this application is not limited thereto.

In a possible implementation, in the communication apparatus shown in FIG. 17, the processing unit 1200 may be one or more processors. The transceiver unit 1100 may be a transceiver, or the transceiver unit 1100 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connection between the processor and the transceiver is not limited in this embodiment of this application.

FIG. 18 is a diagram of a structure of another communication apparatus 2000 according to an embodiment of this application. The communication apparatus in FIG. 18 may be the foregoing terminal device.

As shown in FIG. 18, the communication apparatus 2000 includes one or more processors 2200 and transceivers 2100. The transceiver 2100 may implement functions of the transceiver unit 1100, and the processor 2200 may implement functions of the processing unit 1200.

In various implementations of the communication apparatus shown in FIG. 18, the transceiver may include a receiver and a transmitter, where the receiver is configured to perform a receiving function (or operation), and the transmitter is configured to perform a transmitting function (or operation). The transceiver is configured to communicate with another device/apparatus through a transmission medium.

Optionally, the communication apparatus 2000 may further include one or more memories 2300, configured to store program instructions and/or data. The memory 2300 is coupled to the processor 2200. The coupling in this embodiment of this application may be an indirect coupling or a communication connection between apparatuses, units, or modules in an electrical form, a mechanical form, or another form, and is used for information exchange between the apparatuses, the units, or the modules. The processor 2200 may cooperate with the memory 2300. The processor 2200 may execute the program instructions stored in the memory 2300.

A connection medium between the transceiver 2100, the processor 2200, and the memory 2300 is not limited in this embodiment of this application. In this embodiment of this application, the transceiver 2100, the processor 2200, and the memory 2300 are connected by using a bus 2400 in FIG. 18. The bus is represented by using a bold line in FIG. 18. A connection manner between other components is merely an example for description, and is not limited by reference. The bus may be classified into an address bus, a data bus, a control bus, and the like. For ease of representation, only one thick line is used to represent the bus in FIG. 18, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly executed and accomplished by a hardware processor, or may be executed and accomplished by using a combination of hardware and software modules in the processor.

In embodiments of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of instructions or a data structure and that can be read and/or written by a computer (for example, the communication apparatus shown in this application). However, this is not limited thereto. The memory in embodiments of this application may alternatively be a circuit or any other apparatus that can implement a storage function, and is configured to store program instructions and/or data.

The processor 2200 is mainly configured to process a communication protocol and communication data, control the entire communication apparatus, execute a software program, and process data of the software program. The memory 2300 is mainly configured to store the software program and the data. The transceiver 2100 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to receive data input by a user and output data to the user.

After the communication apparatus is powered on, the processor 2200 can read the software program in the memory 2300, interpret and execute instructions of the software program, and process the data of the software program.

When data needs to be sent wirelessly, the processor 2200 performs baseband processing on the to-be-sent data, and then outputs a baseband signal to a radio frequency circuit. The radio frequency circuit performs radio frequency processing on the baseband signal, and then sends, by using an antenna, a radio frequency signal in a form of an electromagnetic wave. When data is sent to the communication apparatus, the radio frequency circuit receives a radio frequency signal by using the antenna, converts the radio frequency signal into a baseband signal, and outputs the baseband signal to the processor 2200. The processor 2200 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may alternatively include more components or the like than those shown in FIG. 7. This is not limited in this embodiment of this application. The methods performed by the processor and the transceiver are merely examples. For specific steps performed by the processor and the transceiver, refer to the methods described above.

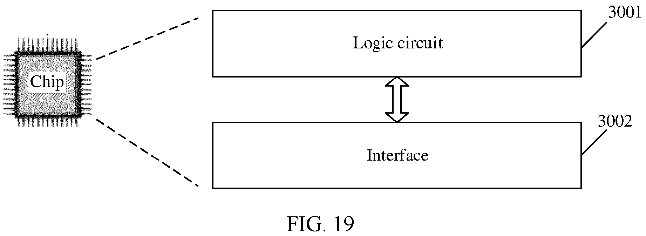

In another possible implementation, in the communication apparatus shown in FIG. 17, the processing unit 1200 may be one or more logic circuits, and the transceiver unit 1100 may be an input/output interface, which is also referred to as a communication interface, an interface circuit, an interface, or the like. Alternatively, the transceiver unit 1100 may be a sending unit and a receiving unit. The sending unit may be an output interface, and the receiving unit may be an input interface. Alternatively, the sending unit and the receiving unit are integrated into one unit, for example, an input/output interface. As shown in FIG. 19, the communication apparatus shown in FIG. 19 includes a logic circuit 3001 and an interface 3002. In other words, the processing unit 1200 may be implemented by using the logic circuit 3001, and the transceiver unit 1100 may be implemented by using the interface 3002. The logic circuit 3001 may be a chip, a processing circuit, an integrated circuit, a system on chip (system on chip, SoC), or the like. The interface 3002 may be a communication interface, an input/output interface, a pin, or the like. For example, FIG. 19 shows an example in which the communication apparatus is a chip. The chip includes the logic circuit 3001 and the interface 3002.

In this embodiment of this application, the logic circuit may further be coupled to the interface. A specific connection manner of the logical circuit and the interface is not limited in this embodiment of this application.

For example, when a communication apparatus is configured to perform the method, the function, or the step performed by a terminal, the logic circuit 3001 is configured to generate a data frame, where the data frame includes a pilot symbol, and an insertion rule of the pilot symbol is determined based on at least one of channel information, a quantity of retransmission times of the data frame, or frame structure information of the data frame.

The interface 3002 is configured to send the data frame.

It may be understood that the communication apparatus shown in this embodiment of this application may implement the method provided in embodiments of this application in a form of hardware or in a form of software. This is not limited in embodiments of this application.

An embodiment of this application further provides a wireless communication system. The wireless communication system includes a first terminal device and a second terminal device. The first terminal device or the second terminal device can be configured to perform the method in any one of the foregoing embodiments.

This application further provides a computer-readable storage medium. The computer-readable storage medium stores computer code. When the computer code is run on a computer, the computer is enabled to perform operations and/or processing performed by the terminal device in the method provided in this application.

This application further provides a computer program product. The computer program product includes computer code or a computer program. When the computer code or the computer program is run on a computer, operations and/or processing performed by the terminal device in the method provided in this application are/is performed.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable-storage medium, and includes several instructions for instructing a computer device (which may be a personal computer, a server, a network device, or the like) to perform all or some of the steps of the methods described in embodiments of this application. The readable-storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:

   generating a data frame, wherein the data frame comprises a pilot symbol, and an insertion rule of the pilot symbol is determined based on at least one of channel information, a quantity of retransmission times of the data frame, or frame structure information of the data frame; and
   sending the data frame.

2. The method according to claim 1, wherein the channel information comprises at least one of a channel interference power, channel state change speed information, a channel bandwidth, or a channel multipath interference strength.

3. The method according to claim 2, wherein transmission of the data frame is performed on a first channel; and the insertion rule of the pilot symbol comprises: when a channel interference power of the first channel falls within a first power range, the data frame comprises a first quantity of pilot symbols; and when the channel interference power of the first channel falls within a second power range, the data frame comprises a second quantity of pilot symbols, wherein all power values in the second power range are greater than all power values in the first power range, and the second quantity is greater than the first quantity.

4. The method according to claim 2, wherein transmission of the data frame is performed on a first channel; and the insertion rule of the pilot symbol comprises: when a channel state change speed indicated by channel state change speed information of the first channel is a first speed, the pilot symbol is inserted at a first time interval; and when the channel state change speed indicated by the channel state change speed information of the first channel is a second speed, the pilot symbol is inserted at a second time interval, wherein the second speed is higher than the first speed, and the second time interval is less than the first time interval.

5. The method according to claim 2, wherein transmission of the data frame is performed on a first channel; and the insertion rule of the pilot symbol comprises: when a channel bandwidth of the first channel is a first bandwidth, M1 consecutive pilot symbols are inserted each time; and when the channel bandwidth of the first channel is a second bandwidth, M2 consecutive pilot symbols are inserted each time, wherein M1 and M2 are integers greater than 1, the second bandwidth is greater than the first bandwidth, and a value of M2 is greater than a value of M1.

6. The method according to claim 5, wherein the channel bandwidth of the first channel is greater than or equal to a bandwidth threshold.

7. The method according to claim 2, wherein transmission of the data frame is performed on a first channel; and the insertion rule of the pilot symbol comprises: when a channel multipath interference strength of the first channel is a first strength, K1 consecutive pilot symbols are inserted each time; and when the channel multipath interference strength of the first channel is a second strength, K2 consecutive pilot symbols are inserted each time, wherein K1 and K2 are integers greater than 1, the second strength is greater than the first strength, and a value of K2 is greater than a value of K1.

8. The method according to claim 7, wherein the channel multipath interference strength of the first channel is greater than or equal to a multipath interference strength threshold.

9. The method according to claim 1, wherein the insertion rule of the pilot symbol comprises: when an $i^{th}$ time of retransmission of the data frame is performed, the data frame comprises a third quantity of pilot symbols; and when a $j^{th}$ time of retransmission of the data frame is performed, the data frame comprises a fourth quantity of pilot symbols, wherein i and j are integers greater than or equal to 0, a value of j is greater than a value of i, and the fourth quantity is greater than the third quantity.

10. The method according to claim 1, wherein the data frame comprises a plurality of data units, and the quantity of retransmission times of the data frame comprises quantities of retransmission times respectively corresponding to the plurality of data transmission units, wherein the plurality of data units comprise a first data unit and a second data unit; and
the insertion rule of the pilot symbol comprises: a $k^{th}$ time of retransmission of the first data unit is performed, and the first data unit comprises a fifth quantity of pilot symbols; and an $m^{r''}$ time of retransmission of the second data unit is performed, and the second data unit comprises a sixth quantity of pilot symbols, wherein m and k are integers greater than or equal to 0, a value of m is greater than a value of k, and the sixth quantity is greater than the fifth quantity.

11. The method according to claim 1, wherein the insertion rule of the pilot symbol comprises: in a sequence from a frame header to a frame trailer, pilot symbols in the data frame are from dense to sparse.

12. The method according to claim 11, wherein the frame structure information of the data frame indicates that a frame structure of the data frame is a first frame format, and a length of a synchronization sequence in the first frame format is less than or equal to a length threshold.

13. The method according to claim 12, wherein the first frame format is a Bluetooth low power frame format.

14. The method according to any one of claims 1 to 13, wherein the insertion rule of the pilot symbol comprises: a plurality of consecutive pilot symbols are inserted each time.

15. The method according to any one of claims 1 to 14, wherein the method is applied to a short-range wireless frequency hopping communication system.

16. A communication apparatus, comprising:

    a processing unit, configured to generate a data frame, wherein the data frame comprises a pilot symbol, and an insertion rule of the pilot symbol is determined based on at least one of channel information, a quantity of retransmission times of the data frame, or frame structure information of the data frame; and
    a transceiver unit, configured to send the data frame.

17. A communication apparatus, comprising a processor, wherein

    the processor is coupled to a memory;
    the memory is configured to store instructions; and
    the processor is configured to execute the instructions, to perform the method according to any one of claims 1 to 15.

18. A computer-readable storage medium, wherein the computer-readable storage medium is configured to store a computer program, and when the computer program is executed, the method according to any one of claims 1 to 15 is performed.

FIG. 1a

FIG. 1b

| Preamble sequence | Synchronization sequence | Physical layer control information | Physical layer data information | Cyclic redundancy check field |
|---|---|---|---|---|

FIG. 2a

| Preamble sequence | Synchronization sequence 1 | Physical layer control information | Guard interval | Synchronization sequence 2 | Physical layer data information | Cyclic redundancy check field |
|---|---|---|---|---|---|---|

FIG. 2b

| Preamble sequence | Synchronization sequence | Physical layer data information | Cyclic redundancy check field |
|---|---|---|---|

FIG. 2c

201

Generate a data frame, where the data frame includes a pilot symbol, and an insertion rule of the pilot symbol is determined based on at least one of channel information, a quantity of retransmission times of the data frame, or frame structure information of the data frame

202

Send the data frame

FIG. 3

FIG. 4

EP 4 550 700 A1

FIG. 5a

FIG. 5b

No interference

Weak interference

Strong interference

Reply ARQN 1 | Reply ARQN 0 | Reply ARQN 1 | Reply ARQN 0 | No reply | No reply | Reply ARQN 0 | Reply ARQN 1

ACL #1 | ACL #2 | ACL #2 | ACL #3 | ACL #3 | ACL #3 | ACL #3 | ACL #3 | ACL #4

FIG. 6

FIG. 7

FIG. 8

First frame   Second frame   Third frame

Frame header

New data

Retransmission for one time

Retransmission for three times

Data symbol          Pilot symbol

## FIG. 9

Fourier transform

$|R_f(\Delta f; \Delta t)|$ ⟷ $|S_f(\gamma)|$

$(\Delta t)_c \approx 1/B_d$

$B_d$

## FIG. 10

FIG. 11

FIG. 12

| Preamble sequence (1 byte) | Synchronization sequence (4 bytes) | Physical layer data information (2 to 258 bytes) | Cyclic redundancy check field (3 bytes) |
|---|---|---|---|

FIG. 13

Synchronization
sequence
(4 bytes)

Data symbol

Pilot symbol

FIG. 14

EP 4 550 700 A1

FIG. 15

N≥2L+1        N≥2L+1        N≥2L+1

▨ Data symbol        ▨ Pilot symbol

FIG. 16

1000

1100        1200

Transceiver unit ——— Processing unit

Communication
apparatus

FIG. 17

2000

2100        2200

Transceiver        Processor

2400

2300

Memory

FIG. 18

Chip

Logic circuit 3001

Interface 3002

FIG. 19

## INTERNATIONAL SEARCH REPORT

| International application No. |
|---|
| **PCT/CN2023/106583** |

| A. CLASSIFICATION OF SUBJECT MATTER |
|---|
| H04L 1/00(2006.01)i |
| According to International Patent Classification (IPC) or to both national classification and IPC |

| B. FIELDS SEARCHED |
|---|
| Minimum documentation searched (classification system followed by classification symbols) |
| IPC: H04L H04W |
| Documentation searched other than minimum documentation to the extent that such documents are included in the fields searched |
| Electronic data base consulted during the international search (name of data base and, where practicable, search terms used) |
| CNTXT, ENTXT, ENTXTC, VCN, WPABS, DWPI, CNKI: 插入, 增, 减, 少, 多, 导频, 训练符号, 训练序列, 次数, 带宽, 多径, 干扰, 相干时间, 信道, 信道状态, 快, 慢, 功率, 格式, 结构, 蓝牙, 蓝牙低功耗, 帧, 重传, 重新传输, 重新发送, 低功耗蓝牙, 蓝牙, 蓝牙低功耗, ble, Bluetooth, insert, increase, decrease, more, less, pilot, training symbol, training sequence, number, count, bandwidth, multi path, interfere, coherent time, channel, state, status, quick, slow, power, format, frame, retransmission |

| C. DOCUMENTS CONSIDERED TO BE RELEVANT | | |
|---|---|---|
| Category* | Citation of document, with indication, where appropriate, of the relevant passages | Relevant to claim No. |
| X | WO 2022141584 A1 (HUAWEI TECHNOLOGIES CO., LTD.) 07 July 2022 (2022-07-07) description, page 39 line 21-page 49 line 22 | 1-4, 7-9, 12-18 |
| A | CN 101272372 A (BEIJING NORTHERN FIBERHOME TECHNOLOGIES CO., LTD.) 24 September 2008 (2008-09-24) entire document | 1-18 |
| A | CN 105743629 A (HUAWEI TECHNOLOGIES CO., LTD.) 06 July 2016 (2016-07-06) entire document | 1-18 |
| A | CN 108702271 A (HUAWEI TECHNOLOGIES DUESSELDORF GMBH) 23 October 2018 (2018-10-23) entire document | 1-18 |
| A | CN 112887068 A (HUAWEI TECHNOLOGIES CO., LTD.) 01 June 2021 (2021-06-01) entire document | 1-18 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 September 2023** | **22 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| | **INTERNATIONAL SEARCH REPORT** | International application No. |
|---|---|---|
| | | **PCT/CN2023/106583** |

**C.    DOCUMENTS CONSIDERED TO BE RELEVANT**

| Category* | Citation of document, with indication, where appropriate, of the relevant passages | Relevant to claim No. |
|---|---|---|
| A | US 2019013914 A1 (HUAWEI TECHNOLOGIES DUESSELDORF GMBH) 10 January 2019 (2019-01-10)<br>entire document | 1-18 |

Form PCT/ISA/210 (second sheet) (July 2022)

**INTERNATIONAL SEARCH REPORT**
Information on patent family members

International application No.

**PCT/CN2023/106583**

| Patent document cited in search report | | | Publication date (day/month/year) | Patent family member(s) | | | Publication date (day/month/year) |
|---|---|---|---|---|---|---|---|
| WO | 2022141584 | A1 | 07 July 2022 | None | | | |
| CN | 101272372 | A | 24 September 2008 | None | | | |
| CN | 105743629 | A | 06 July 2016 | EP | 3416326 | A1 | 19 December 2018 |
| | | | | EP | 3416326 | A4 | 20 February 2019 |
| | | | | US | 2018367344 | A1 | 20 December 2018 |
| | | | | US | 10505764 | B2 | 10 December 2019 |
| | | | | WO | 2017148190 | A1 | 08 September 2017 |
| CN | 108702271 | A | 23 October 2018 | WO | 2017144112 | A1 | 31 August 2017 |
| | | | | US | 2019013914 | A1 | 10 January 2019 |
| | | | | US | 10644853 | B2 | 05 May 2020 |
| | | | | EP | 3411981 | A1 | 12 December 2018 |
| | | | | EP | 3411981 | B1 | 08 April 2020 |
| CN | 112887068 | A | 01 June 2021 | WO | 2021104020 | A1 | 03 June 2021 |
| US | 2019013914 | A1 | 10 January 2019 | WO | 2017144112 | A1 | 31 August 2017 |
| | | | | EP | 3411981 | A1 | 12 December 2018 |
| | | | | CN | 108702271 | A | 23 October 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210938211

- CN 202211350145